**Europäisches Patentamt**

**European Patent Office**

**Office européen des brevets**

(11) Veröffentlichungsnummer: **0 271 644**
**B1**

(12) # EUROPÄISCHE PATENTSCHRIFT

(45) Veröffentlichungstag der Patentschrift:
30.05.90

(51) Int. Cl.⁵: **G01G 23/01**

(21) Anmeldenummer: **87113380.7**

(22) Anmeldetag: **14.09.87**

(54) **Verfahren zur Linearisierung einer elektronischen Waage.**

(30) Priorität: **16.12.86 CH 4999/86**

(43) Veröffentlichungstag der Anmeldung:
**22.06.88 Patentblatt 88/25**

(45) Bekanntmachung des Hinweises auf die Patenterteilung:
**30.05.90 Patentblatt 90/22**

(84) Benannte Vertragsstaaten:
**DE FR GB IT**

(56) Entgegenhaltungen:
**DE-A- 3 144 103**

**I.S.A.**
**TRANSACTIONS,Band 22,Nr.2,1983,Seiten 31-47,Research Triangle Parc,NC,US;D.W.PAGE,"A high precision load cell comparator for large mass".**

**Die Akte enthält technische Angaben, die nach dem Eingang der Anmeldung eingereicht wurden und die nicht in dieser Patentschrift enthalten sind.**

(73) Patentinhaber: **Mettler-Toledo AG, im Langacher, CH-8606 Greifensee(CH)**

(72) Erfinder: **Reichmuth, Arthur, Im Neuguet 6, CH-8620 Wetzikon(CH)**
Erfinder: **Heusser, Martin, in der Au 57, CH-8706 Meilen(CH)**

**Beschreibung**

Gegenstand der Erfindung ist ein Verfahren zur Linearisierung einer elektronischen Waage unter Verwendung von mehreren Lasten, mit denen die Waage einzeln und in Kombination zur Ermittlung der für die Linearisierung notwendigen Korrekturparameter belastet wird.

Bei elektronischen Waagen erfolgt die Gewichtsanzeige bekanntlich durch Umwandlung der vom aufgelegten Gewicht erzeugten Kraft auf die Messzelle in ein elektrisches Signal. Der Verlauf dieses Signals kann Linearitätsfehler aufweisen. Das angezeigte Gewicht stimmt dann nicht über den gesamten Wägebereich mit dem aufgelegten überein.

Zur Überprüfung und Korrektur der Linearität elektronischer Waagen ist bekannt, mehrere Referenzgewichte mit genau bekannter Masse aufzulegen, die angezeigten Gewichte mit dem effektiven zu vergleichen und die entsprechenden Korrekturwerte in der Waagenelektronik zu berücksichtigen.

Die US-A 3 976 150 schlägt dazu vor, nacheinander vier genau bekannte Gewichte aufzulegen, die gemessenen Werte abzuspeichern und zur Berechnung der Linearisierungskoeffizienten heranzuziehen.

Im wesentlichen in ähnlicher Weise wird in der EP-A 0 044 707 verfahren. Der angezeigte Wert eines genau bekannten Referenzgewichtes wird gespeichert. Anschliessend erfolgt die Berechnung der Differenz zwischen dem angezeigten und dem effektiven Gewicht. Der sich ergebende Wert wird dann zur Korrektur der Anzeige bei der Messung eines aufgelegten Gewichts durch den Rechner berücksichtigt.

Aus der Deutschen Offenlegungsschrift DE-A1 3 144 103 ist eine weitere elektrische Waage bekannt, bei der zur Kalibrierung ein unbekanntes Referenzgewicht von 90–100% der Höchstlast verwendet wird, dessen Grösse gemessen und in einem Speicher festgehalten wird.

Zur Durchführung einer Nachkalibrierung der Waage wird das Referenzgewicht aufgelegt, dessen Grösse erneut gemessen und das Resultat mit dem gespeicherten Wert verglichen. Mit der Differenz der beiden Messwerte kann die Kalibrierung von der Auswerteelektronik durchgeführt werden.

Diese bekannte Vorrichtung zur Kalibrierung ermöglicht die genaue Bestimmung eines einzelnen Referenzpunktes; eine Überprüfung und Korrektur der Linearität der Waage über den gesamten Messbereich ist nicht möglich.

Der vorliegenden Erfindung liegt die Aufgabe zugrunde, ein Verfahren zur Linearisierung zu schaffen, das mit weniger Aufwand als die bekannten Verfahren zum gleichen Ergebnis kommt.

Erfindungsgemäss wird bei einem Verfahren der eingangs genannten Art dies dadurch erreicht, dass wenigstens eine der Lasten unbekannt bzw. nicht abgeglichen ist. Damit lässt sich der beträchtliche Aufwand für genau bekannte Referenzgewichte ganz vermeiden (oder doch, im Falle der Mitverwendung eines genau bekannten Kalibriergewichtes, beträchtlich reduzieren).

Die Linearisierung kann mit Lasten erfolgen, deren Grössen unbekannt, im einzelnen jedoch geringer als die Maximallast der Waage sind. Die Beschaffenheit der Lasten ist belanglos und Änderungen des Wertes der Lasten zwischen zwei Linearisierungen haben auf den Abgleich keinen Einfluss. Die Konstanz der Lasten während des Ableichzyklus ist hingegen leicht zu erreichen.

Solche unbekannten Lasten, deren Werte nicht bekannt sein müssen, können am Standort der Waage gelagerte Gegenstände oder Wägegüter sein. Die Wirkungen von einer oder mehreren unbekannten Lasten können gemäss der Erfindung durch entsprechende Hilfsgrössen des Messpfades (z.B. Spannung, Strom) ersetzt werden. Einzige Bedingung ist die Konstanz der Last, des Gegenstandes oder des Stromes etc. während der Durchführung der Linearisierung der Waage.

Die Lasten können extern auf die Waagschale gelegt werden; sie können aber auch in der Waage eingebaut und von Hand oder mit einem Aktuator betätigbar sein.

Die Erfindung wird im folgenden anhand eines Ausführungsbeispiels und eines Diagrammes beschrieben. Es zeigen:

Figur 1 eine schematische Darstellung einer kraftkompensierten Waage,
Figur 2 ein Diagramm

Am Waagengestell 1 ist über Lenker 3 und Biegelager 5 ein Lastaufnehmer 7 parallel geführt. Ein Waagbalken 9 ist über ein Biegelager 11 an einer Konsole 13 schwenkbar aufgehängt. An seinem Ende ist er über Biegelager 15 an den Lastaufnehmer 7 gekoppelt. Nahe seinem anderen Ende verfügt er über eine Tauchspule 17, welche in ein ortsfestes Permanentmagnetsystem 19 bekannter Art eintaucht. Der Positionsgeber ist mit Bezugszeichen 21 angegeben.

Am unteren Ende des Lastaufnehmers 7 ist ein Ausleger befestigt, der die Waagschale 23 trägt. Mit 25 sind zwei Gewichte bezeichnet, die zur Linearisierung auf die Waagschale 23 aufgelegt werden.

Annahmen:

Vom nichtlinearen Verlauf der Korrekturfunktion $f_L$ zur Linearisierung der Waage wird der Einfachheit halber für dieses Beispiel angenommen, dass sie 2. Ordnung (Parabel) sei und die Anteile höherer Ordnungen vernachlässigt werden können. Der Ansatz lautet demzufolge

$$z = f_L(y) := a + by + cy^2 \quad 1)$$

wobei die Koeffizienten bedeuten: a die Nullpunktsverschiebung, b die Steigung und c den quadratischen Anteil.

<u>Vorgehen:</u>

Die Waage wird bei vier unterschiedlichen Belastungen $x_1$ ...$x_4$ ausgemessen. Diese Belastungen werden mit den nachfolgend angegebenen Kombinationen von drei unbekannten Lasten, d.h. den nicht abgeglichenen Gewichten $x_0$, $x_1$ und $x_3$ durchgeführt, welche auf die Waagschale der zu linearisierenden Waage aufgelegt werden, wobei die zeitliche Reihenfolge des Auflegens bezüglich des Abgleichsprozesses belanglos ist.

$$x_1$$
$$x_2 = x_1 + x_0$$
$$x_3$$
$$x_4 = x_3 + x_0$$

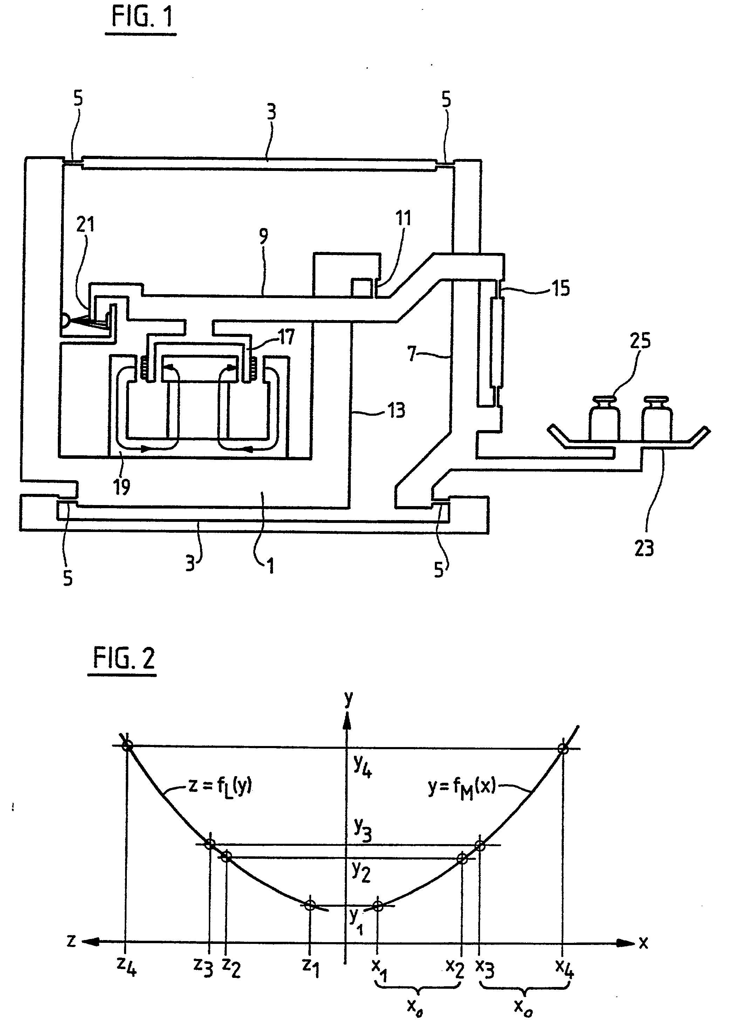

Bildlich dargestellt ergeben die Messungen eine Kurve $y = f_M(x)$ gemäss Figur 2. Auf der x-Achse ist die Belastung und auf der y-Achse das Rohresultat aufgetragen. Die z-Achse stellt die angezeigte Belastung dar, welche mit der auf den Messgeber wirkenden Belastung identisch sein soll.

Mit den vier Wägungen lassen sich gemäss

$$z_i = f_L(y_i) := x_i \quad 1)$$

folgende Gleichungen aufstellen:

$$z_1 = a + by_1 + cy_1^2 := x_1 \quad 2)$$
$$z_2 = a + by_2 + cy_2^2 := x_2 = x_1 + x_0 \quad 3)$$
$$z_3 = a + by_3 + cy_3^2 := x_3 \quad 4)$$
$$z_4 = a + by_4 + cy_4^2 := x_4 = x_3 + x_0 \quad 5)$$

Die Rohresultate $y_1$ ... $y_4$ der jeweiligen Messungen sind bekannt; unbekannt sind folglich a, b, c; $x_0$ $x_1$, $x_3$.

Gemäss einer ersten Ausgestaltung der Erfindung geht man davon aus, dass die vier Messungen 2) bis 5) ausgeführt werden und keine der vier Belastungen $x_1$ ... $x_4$ bekannt sei. Der Koeffizient c lässt sich dann in Funktion von b bestimmen.

$$3)-2): \quad x_0 = b(y_2 - y_1) + c(y_2^2 - y_1^2) \qquad 6)$$

$$5)-4): \quad x_0 = b(y_4 - y_3) + c(y_4^2 - y_3^2) \qquad 7)$$

$$7)-6): \quad 0 = b(y_4 - y_3 - y_2 + y_1) + c(y_4^2 - y_3^2 - y_2^2 + y_1^2)$$

$$c = -b \, \frac{y_4 - y_3 - y_2 + y_1}{y_4^2 - y_3^2 - y_2^2 + y_1^2} \qquad 8)$$

woraus sich mit 1) ein linearer Anzeigewert bestimmen lässt

$$z = a + b \left( y - \frac{y_4 - y_3 - y_2 + y_1}{y_4^2 - y_3^2 - y_2^2 + y_1^2} \, y^2 \right) := a + by^*, \qquad 9)$$

wobei

$$y^* = f(y) = y \left[1 - \frac{y_4 - y_3 - y_2 + y_1}{y_4^2 - y_3^2 - y_2^2 + y_1^2} \, y\right] \quad \text{ist.} \qquad 10)$$

Einer zweiten Ausgestaltung gemäss geht man davon aus, dass die Last $x_0$ bekannt sei. Dann können die Koeffizienten c und b aus 6) und 7) direkt bestimmt werden:

$$c = \frac{x_0 \, (-y_4 + y_3 + y_2 - y_1)}{(y_4 - y_3)(y_2 - y_1)(y_4 + y_3 - y_2 - y_1)} \qquad 11)$$

$$b = \frac{x_0 \, (y_4^2 - y_3^2 - y_2^2 + y_1^2)}{(y_4 - y_3)(y_2 - y_1)(y_4 + y_3 - y_2 - y_1)} \qquad 12)$$

Numerisches Beispiel:

Nimmt man an, das Linearisierungspolynom

$$1): z = f_L(y) = a + by + cy^2$$

besitze folgende Koeffizienten:

$a = -0,1$
$b = 1$
$c = 0,1$ ,
so sind die zu den Lasten x

| Belastung | Rohresultat |
|-----------|-------------|
| $x_1 = 0,1$ | $y_1 = 0,196\ 152\ 423$ |
| $x_2 = 0,5$ | $y_2 = 0,567\ 764\ 363$ |
| $x_3 = 0,6$ | $y_3 = 0,656\ 854\ 250$ |
| $x_4 = 1$ | $y_4 = 1,000\ 000\ 000$ |

Nach der ersten Ausgestaltung der Erfindung:

Bekannt seien nur $y_1$ ... $y_4$.

$$8): \quad c_b = -b \, \frac{-0,028'466'190}{0,284'661'896} = (0,100'000'001) \, b$$

Damit kann das linearisierte Rohresultat bestimmt werden, sofern dies von Interesse ist.

$13): y^* = y[1 - (-0,100'000'001)y]$
$y_1^* = 0,196'152'432 \, [1 - (-0,100'000'001)(0,196'152'423)] = 0,2$
$y_2^* = 0,567'764'363 \, [1 - (-0,100'000'001)(0,567'764'363)] = 0,6$
$y_3^* = 0,656'854'250 \, [1 - (-0,100'000'001)(0,656'854'250)] = 0,7$
$Y_4^* = 1[1 - (-0,100'000'001) \, 1] = 1,100'000'001$

Es liegt nun ein lineares Signal vor. Falls die Differenz

$x_4 - x_1 = 0,9$ bekannt ist,

4

kann aus 9) noch $b_b$ bestimmt werden:

$$b_b = \frac{0,9}{1,100'000'001 - 0,2} = 0,999'999'999 = b - 10^{-9};$$

und bei Kenntnis von z.B.
$x_1 = 0,1$
auch die Konstante

$$a_b = 0,1 - (0,999'999'999)\, 0,2 = -0,1 = a\,.$$

(Die Differenzen zwischen den berechneten und den vorgegebenen Koeffizienten, hier wie auch weiter unten, ergeben sich aus der endlichen Rechengenauigkeit.)

<u>Nach der zweiten Ausgestaltung der Erfindung:</u>

Bekannt seien ausser $y_1$ .. $y_4$ noch

$$x_0 = x_2 - x_1 = x_4 - x_3 = 0,4.$$

$$11): \quad c_b = 0,4\left(\frac{0,028'466'190}{0,113'864'758}\right) = 0,100'000'001 = c + 10^{-9}$$

$$12): \quad b_b = 0,4\left(\frac{0,284'661'896}{0,113'864'758}\right) = 0,999'999'999 = b - 10^{-9}$$

Falls noch z.B. $x_1$ bekannt ist, kann aus 2) noch a bestimmt werden:

$$a_b = 0,1 - (0,200'000'000) = -0,1 = a$$

Bei der praktischen Durchführung des oben an zwei Beispielen erläuterten Verfahrens werden die Belastungen vorzugsweise so ausgewählt, dass die kleinste den Messbereich nicht unterschreitet, die grösste ihn nicht überschreitet und die Belastungen im übrigen über den ganzen Messbereich verteilt sind.

Ist das Messsystem mit einer beliebigen unbekannten aber konstanten Vorlast $x_s$ belastet, z.B. einer Systemlast, welche auch entlastend wirken kann, oder einer zusätzlichen Last auf der Waagschale, dann ändern sich die Belastungen wie folgt:

$$x_1 \rightarrow x'_1 = x_s + x_1$$
$$x_2 \rightarrow x'_2 = x_s + x_1 + x_0$$
$$x_3 \rightarrow x'_3 = x_s + x_3$$
$$x_4 \rightarrow x'_4 = x_s + x_3 + x_0$$

Setzt man diese neuen Belastungswerte anstelle der alten in die Gleichungen 2) ...5) ein und bestimmt anschliessend die Differenzen (Gleichungen 6) und 7)), so wird sofort ersichtlich, dass die Vorlast keinen Einfluss nimmt, weder auf den Berechnungsablauf, noch auf das Ergebnis.

Der Aufwand zur Erzeugung der vier Belastungszustände kann weiter reduziert werden, wenn $x_1 = 0$ gewählt wird, d.h., wenn die Last $x_1$ ganz weggelassen wird. Denn auch mit den zwei restlichen Lasten $x_0$ und $x_3$ können alle vier Belastungszustände kombiniert werden:

$$x_1 = 0$$
$$x_2 = x_0$$
$$x_3 = x_3$$
$$x_4 = x_3 + x_0$$

Anstelle der Gewichte können als Lasten in allen Fällen auch Ströme oder Spannungen zur Erzeugung der Belastungszustände verwendet werden.

Geht man beim Linearitätsfehler von einer Kurve höherer Ordnung aus, so ist das Vorgehen zur Berechnung des Korrekturkoeffizienten analog zu demjenigen 2. Ordnung. Beispielsweise können im Fall einer Kurve 3. Ordnung

$$z = f_L(y) := a + by + cy^2 + dy^3$$

durch Beizug einer dritten unbekannten Last zusammen mit der Last $x_0$ mindestens zwei weitere Messungen durchgeführt werden, woraus zwei weitere Gleichungen mit zwei weiteren Unbekannten gewonnen werden können. Mit den sechs Gleichungen lassen sich analog zum vorstehenden Vorgehen die Korrekturkoeffizienten errechnen.

Mit einem Polynomansatz n-ter Ordnung sind 2n Messungen der oben beschriebenen Art nötig, um den Linearisierungsprozess durchführen zu können, ohne dass der Wert einer Last bekannt sein müsste.

Anstelle des Polynomansatzes der beschriebenen Art kann jede andere passende Funktion als Ansatz für die Linearisierung verwendet werden. So ist z.B. ist eine stückweise Aufteilung in Geraden möglich, oder es kann die Methode der Splines angewendet werden, welche Polynome niedrigen Grades nahtlos zur Korrekturfunktion aneinanderfügt (vergl. z.B.: Ahlberg,J.H., Nilson,E.N., Walsh,J.L.: "The Theory of Splines an their Applications", Academic Press, New York [1967]).

Wesentlich ist bei allen Korrekturmethoden, dass aus den durch die Belastungen gewonnenen Rohresultaten, sowie aus den all fällig vorhandenen Kenntnissen über die Lasten, die für jeden Ansatz spezifischen Korrekturparameter bestimmt zerden: z.B. die Koeffizienten eines Polynoms oder die Steigungen und Nullpunktsverschiebungen von Geraden bei stückweiser Aufteilung in Geraden, usw.

Die Abstufung der Lasten $x_1$, $x_2$, $x_3$,.. etc. kann in einem weiten Rahmen variieren; allerdings sollten alle Lasten im zu linearisierenden Bereich liegen. Zweckmässigerweise ist $x_0$ kleiner als die Differenz $x_3-x_1$ (sowie, gegebenenfalls, als $x_5-x_3$).

## Patentansprüche

1. Verfahren zur Linearisierung einer elektronischen Waage unter Verwendung von mehreren Lasten, mit denen die Waage einzeln und in Kombination zur Ermittlung der für die Linearisierung notwendigen Korrekturparameter belastet wird, dadurch gekennzeichnet, dass wenigstens eine der Lasten unbekannt bzw. nicht abgeglichen ist.

2. Verfahren nach Anspruch 1, dadurch gekennzeichnet, dass

a) die Waage zur Bestimmung der Korrekturfunktion [$f_L(y)$] nacheinander je einzeln un din Kombination mit zwei oder mehreren unbekannten Lasten belastet wird,

b) aus den sich ergebenden Rohresultaten des Messgebers $y = f_M(x)$ die Korrekturparameter berechnet werden und

c) die errechneten Korrekturparameter zur Berechnung der angezeigten Last [$z = f_L(y)$] herangezogen werden.

3. Verfahren nach Anspruch 1, dadurch gekennzeichnet, dass

a) die Waage zur Bestimmung der Korrekturfunktion [$f_L(y)$] nacheinander je einzeln und in Kombination mit einer oder mehreren bekannten und einer oder mehreren unbekannten Lasten belastet wird,

b) aus den sich ergebenden Rohresultaten die Korrekturparameter berechnet werden und

c) die errechneten Korrekturparameter zur Berechnung der angezeigten Last [$z = f_L(y)$] herangezogen werden.

4. Verfahren nach Anspruch 2 oder Anspruch 3, dadurch gekennzeichnet, dass als Korrekturfunktion $z = f_L(y)$ stückweise Geraden oder ein Polynom oder Splines verwendet werden.

5. Verfahren nach einem der Ansprüche 2 bis 4, dadurch gekennzeichnet, dass die Waage folgendermassen belastet wird:

$x_1 = 0$
$x_2 = x_0$
$x_3$
$x_4 = x_3 + x_0$

6. Verfahren nach einem der Anspruche 1 bis 5, dadurch gekennzeichnet, dass als Lasten (x) Gewichte oder elektrische Ströme oder elektrische Spannungen verwendet werden.

7. Verfahren nach einem der Ansprüche 1 bis 5, dadurch gekennzeichnet, dass als Lasten (x) Kombinationen von Gewichten und elektrischen Strömen und elektrischen Spannungen verwendet werden.

## Claims

1. A process for the linearisation of an electronic weighing machine using a plurality of loads with which the weighing machine is loaded individually and in combination for the purposes of ascertaining the correction parameterrs required for the linearisation effect, characterised in that at least one of the loads is unknown or non-calibrated.

2. A process according to claim 1 characterised in that
a) for determining the correction function $[f_L(y)]$ the weighing machine is successively loaded individually and in combination with two or more unknown loads,
b) the correction parameters are calculated from the rough results of the measurement value generator $y = f_M(x)$, which are produced thereby, and
c) the calculated correction parameters are used for calculating the displayed load $[z = f_L(y)]$.

3. A process according to claim 1 characterised in that
a) for determining the correction function $[f_L(y)]$ the weighing machine is successively loaded individually and in combination with one or more known loads and one or more unknown loads,
b) the correction parameters are calculated from the rough results produced thereby, and
c) the calculated correction parameters are used for calculating the displayed load $[z = f_L(y)]$.

4. A process according to claim 2 or claim 3 characterised by using piecewise straight lines or a polynomial or splines as the correction function $z = f_L(y)$.

5. A process according to one of claims 2 to 4 characterised in that the weighing machine is loaded as follows:
$x_1 = 0$
$x_2 = x_0$
$x_3$
$x_4 = x_3 + x_0.$

6. A process according to one of claims 1 to 5 charcterised in that weights or electrical currents or electrical voltages are used as the loads (x).

7. A process according to one of claims 1 to 5 characterised in that combinations of weights and electrical currents and electrical voltages are used as the loads (x).

## Revendications

1. Procédé de linéarisation d'une balance électronique par utilisation de plusieurs charges avec lesquelles on sollicite la balance séparément et en combinaison, pour déterminer les paramètres de correction nécessaires à la linéarisation, caractérisé en ce qu'au moins l'une des charges est inconnue ou non égalisée.

2. Procédé selon la revendication 1, caractérisé en ce que
a) on sollicite la balance successivement avec deux charges ou plus, séparément et en combinaison pour déterminer la fonction de correction $[f_L(y)]$,
b) on calcule les paramètres de correction à partir des résultats bruts obtenus avec le capteur de mesure $y = f_M(x)$, et
c) on utilise les paramètres de correction calculés pour calculer la charge indiquée $[z = f_L(y)]$.

3. Procédé selon la revendication 1, caractérisé en ce que
a) on sollicite la balance successivement, séparément et en combinaison, avec une charge connue ou plusieurs et avec une charge inconnue ou plusieurs, pour déterminer la fonction de correction $[f_L(y)]$,
b) on calcule les paramètres de correction à partir des résultats bruts obtenus, et
c) on utilise les paramètres de correction calculés pour calculer la charge indiquée $[z = (f_L(y)]$.

4. Procédé selon la revendication 2 ou la revendication 3, caractérisé en ce que l'on utilise des segments de droite ou un polynôme ou des splines comme fonction de correction $(z = [f_L(y)]$.

5. Procédé selon l'une des revendications 2 à 4, caractérisé en ce que la balance est sollicitée de la façon suivante:
$x_1 = 0$
$x_2 = x_0$
$x_3$
$x_4 = x_3 + x_0$

6. Procédé selon l'une des revendications 1 à 5, caractérisé en ce que l'on utilise comme charges (x) des poids ou des courants électriques ou des tensions électriques.

7. Procédé selon l'une des revendications 1 à 5, caractérisé en ce que l'on utilise comme charges (x) des combinaisons de poids et de courants électriques et de tensions électriques.

## FIG. 1

## FIG. 2